# EUROPÄISCHE PATENTANMELDUNG

(11) **EP 0 957 551 A1**
(43) Veröffentlichungstag der Anmeldung: **17.11.1999**
(21) Anmeldenummer: 99810395.6
(22) Anmeldetag: 06.05.1999
(51) Int. Cl.: H02G 3/04

(54) **Klammer für einen Kabelkanal**

(30) Priorität: 12.05.1998 DE 19821069
(71) Anmelder: HILTI Aktiengesellschaft, 9494 Schaan (LI)
(72) Erfinder: Hoffmann, Armin, 86899 Landsberg (DE)
(74) Vertreter: Wildi, Roland

(57) **Zusammenfassung**

Es ist eine Klammer für einen Kabelkanal (20) beschrieben, der an seiner offenen Seite (23), im Bereich der freien Enden (24) seiner Seitenwände (22) nach innen abragende, leistenartige Öffnungsränder (26) aufweist. Die Klammer (1) weist einen die offene Seite (23) überbrückenden, länglichen Brückenabschnitt (2) auf, dessen Längsenden (5) mit Anbindeteilen (3) für die leistenartigen Öffnungsränder (26) versehen sind. Die Anbindeteile (3) sind als nach innen, aufeinander zugekröpfte Haken ausgebildet und jeweils in einer Hinterschneidung (29) verrastbar, die in einer Verankerungsnut (28) vorgesehen ist, welche in Längsrichtung des Kabelkanals (20) verläuft und von einem zur offenen Seite (23) abgewinkelten Öffnungsrandteil (27) und der Seitenwand (22) begrenzt ist.

## Beschreibung

Die Erfindung betrifft eine Klammer für einen Kabelkanal gemäss dem Oberbegriff des Patentanspruchs 1.

Kabelkanäle der gattungsgemässen Art dienen üblicherweise der Aufnahme von elektrischen Kabeln und Leitungen. Sie können in Vertiefungen an Wänden, Decken oder Böden montiert sein. Oft werden sie auch an der Oberfläche von Wänden angeordnet. Die am häufigsten verwendeten Kabelkanäle weisen einen etwa U-förmigen Querschnitt auf und besitzen eine Rückwand, von der zwei Seitenwände meist etwa rechtwinklig abragen. Die der Rückwand des Kabelkanals gegenüberliegende Seite ist offen ausgebildet und erlaubt das Einlegen der Kabel. Es sind auch sogenannte Eckkanäle bekannt, die für eine Montage in der von zwei aneinanderstossenden Mauern gebildeten Ecke ausgebildet sind. Derartige Eckkanäle besitzen einen im wesentlichen dreieckförmigen Querschnitt, der von einer Rückwand und zwei im stumpfen Winkel davon abragenden Seitenwänden oder von zwei an den Längsseiten verbundenen Seitenwänden gebildet ist.

Die bekannten Kabelkanäle werden nach dem Einlegen der Kabel mit Deckeln verschlossen, die in Hinterschneidungen an der Aussenseite der freien Enden der Seitenwände verrasten. Die in den Kabelkanal eingelegten Kabel belasten die Seitenwände und drücken diese nach aussen. Dies kann zu Schwierigkeiten beim Aufsetzen und Verrasten des Deckels führen. Um den durch die eingelegten Kabel belasteten Seitenwänden eine grössere Stabilität zu verleihen, sind Klammern vorgesehen, die die Öffnung des Kabelkanals überbrücken und an leistenförmigen Rändern befestigbar sind, die im Bereich der freien Enden von der Innenseite der Seitenwände abragen und in Längsrichtung des Kabelkanals verlaufen. Aus der DE-U-79 31 274 ist eine Klammer für Kabelkanäle bekannt, die in Langlöchern in den leistenförmigen Rändern festlegbar ist. Dazu weist sie an ihren beiden Längsenden jeweils zwei durch einen Längsschlitz voneinander getrennte Rastfinger mit Rasthaken auf. Die Rastfinger sind durch quer zur Längserstreckung der Klammer einwirkende Kräfte zusammendrückbar. Dadurch ist die Breite der Klammer im Bereich der Rasthaken verringerbar und können die Rastfinger durch ein Langloch geführt werden. Ein in den Schlitz zwischen die Rastfinger eingreifendes Sperrglied, das bedarfsweise ausrückbar ist, verhindert ein unbeabsichtigtes Lösen der Klammer von den Rändern.

Die bekannte Klammer ist nur an den in vorgegebenen Abständen in den Rändern vorgesehenen Langlöchern befestigbar. Eine Montage an beliebiger Stelle des Kabelkanals, beispielsweise im Bereich des Kanal- oder Deckelstosses, ist nicht möglich. Das Lösen der montierten Klammer, beispielsweise um weitere Kabel in den Kanal einzulegen, ist nur sehr umständlich zu bewerkstelligen. Um die Rastfinger zusammendrücken zu können, muss zunächst das Sperrglied aus dem Schlitz ausgerückt werden. Dazu sind beide Hände erforderlich; gegebenenfalls ist sogar ein Hilfmittel, wie beispielsweise ein Schraubenzieher oder dergleichen, erforderlich, um das Sperrglied ausrücken zu können.

Aus der DE-U-295 15 365 ist eine Klammer bekannt, die an ihren Längsenden etwa U- förmig ausgebildete Klemmabschnitte aufweist. Die leistenförmigen Ränder, die von den freien Enden der Seitenwände nach innen abragen, sind wenigstens an ihrer Oberseite mit Längsriffelungen versehen. Im Zusammenwirken mit den korrespondierend ausgebildeten Innenflächen der Klemmabschnitte bilden sie einen Rillenrastverschluss. Die Klammer weist den Vorteil auf, dass sie bei Bedarf längsverschiebbar ist und an beliebiger Stelle an den Rändern des Kanals montierbar ist. Die Montage der Klammer ist zwar relativ einfach zu bewerkstelligen. Zur Demontage, beispielsweise um weitere Kabel in den Kanal einzulegen, sind jedoch beide Hände erforderlich, um den Rillenrastverschluss zu lösen.

Aufgabe der vorliegenden Erfindung ist es daher, eine Klammer für einen Kabelkanal zu schaffen, die an beliebiger Stelle entlang der Länge des Kabelkanals einfach zu montieren ist. Die montierte Klammer soll bei Bedarf in die gewünschte Position verschiebbar sein und ein Herausfallen der in den Kanal eingelegten Kabel verhindern. Andererseits soll sichergestellt sein, dass sie, insbesondere bei geschlossenem Deckel, nicht unbeabsichtigt verrücken kann. Sie soll möglichst einfach und nur mit einer Hand wenigstens einseitig von der Schiene lösbar sein, beispielsweise um nachträglich noch weitere Kabel in den Kanal einzulegen. Die montierte Klammer soll dem belegten Kanal eine ausreichende Steifigkeit verleihen, damit die Seitenwände auf Mass gehalten werden und der Deckel mit ausreichender Klemmkraft aufgesetzt werden kann.

Die Lösung dieser Aufgaben besteht in einer Klammer für einen Kabelkanal, welche die im kennzeichnenden Abschnitt des Patentanspruchs 1 angeführten Merkmale aufweist. Die erfindungsgemässe Klammer ist für einen Kabelkanal vorgesehen, der an seiner offenen Seite, im Bereich der freien Enden seiner Seitenwände nach innen abragende, leistenartige Öffnungsränder aufweist. Sie weist einen die offene Seite überbrückenden, länglichen Brückenabschnitt auf, dessen Längsenden mit Anbindeteilen für die leistenartigen Öffnungsränder versehen sind. Die Anbindeteile sind als nach innen, aufeinander zugekröpfte Haken ausgebildet und jeweils in einer Hinterschneidung verrastbar, die in einer Verankerungsnut vorgesehen ist, welche in Längsrichtung des Kabelkanals verläuft und von einem zur offenen Seite abgewinkelten Öffnungsrandteil und der Seitenwand begrenzt ist.

Die erfindungsgemäss ausgebildete Klammer ist an beliebiger Stelle entlang der Öffnungsränder montierbar und kann bei Bedarf auch noch verschoben werden. Die hakenförmig ausgebildeten Anbindeteile sind einfach in die mit einer Hinterschneidung versehenen Verankerungsnuten, die von den abgewinkelten Öffnungsrändern gebildet werden, einsetzbar und verhaken in der in Längsrichtung der Öffnungsränder verlaufenden Hinterschneidung. Bei Zugbeanspruchung, beispielsweise durch das Kabelgewicht bei Deckenmontage, verklemmt sich der Verhakungsmechanismus noch weiter. Damit wird die Haltekraft der Klammer verstärkt, und einem unbeabsichtigten Lösen der Klammer vom Kabelkanal kann wirkungsvoll entgegengewirkt werden.

Der Verhakungsmechanismus der hakenförmigen Anbindeteile in der Hinterschneidung der Verankerungsnut ist andererseits bei Bedarf sehr einfach wieder lösbar, indem die Klammer an einem Längsende gefasst wird und aus der Verankerungsnut herausgezogen wird. Wird die Klammer auf diese Weise einseitig hochgezogen, beispielsweise um den Kanal mit weiteren Kabeln nachzubelegen, wird das hakenartige Anbindeteil am gegenüberliegenden Längsende der Klammer weiter in die Hinterschneidung der Verankerungsnut eingedreht. Dabei stützt sich das Längsende der Klammer an der Innenseite der Seitenwand des Kabelkanals ab. Der Verhakungsmechanismus verklemmt sich in der Hinterschneidung der Verankerungsnut und bildet eine Art Gelenk, um das die Klammer hochgezogen werden kann, wobei das gegenüberliegende Längsende der Klammer mit dem Öffnungsrand verbunden bleibt. Die montierte Klammer übernimmt die Versteifung der Seitenwände und gewährleistet den korrekten Abstand der Seitenwände voneinander, damit der Deckel mit der erforderlichen Klemmkraft auf den Kabelkanal aufsetzbar ist.

Es erweist sich von Vorteil für die Haltekraft der Klammer, wenn der quer zur Längserstreckung des Kabelkanals gemesse Abstand der einander zugekehrten Hakenanschläge von dem zugehörigen Längsende der Klammer grösser ist als die lichte Weite der Verankerungsnut an ihrer Mündung. Durch die gewählten geometrischen Verhältnisse drücken die Längsränder der Klammer gegen die oberhalb der Öffnungsränder verlaufenden Abschnitte der Seitenwände, und die hakenartigen Anbindungsteile werden infolge der Vorspannung weiter in die Hinterschneidungen an den abgewinkelten Öffnungsrandteilen gepresst.

Zur Erhöhung der Haltekraft der an den Öffnungsrändern montierten Klammer ist der Brückenabschnitt mit wenigstens einem von Hand betätigbaren Riegelorgan ausgestattet. Das Riegelorgan umfasst eine quer zur Längserstreckung des Kabelkanals ausbiegbare Klinke mit einem Fixierhaken, der in Schliesslage eine Rastverbindung mit einer Rastnase an der nach innen gerichteten Seite der abgewinkelten Öffnungsrandteile eingeht. Indem für die Klammer eine zusätzliche Fixierung vorgesehen ist, kann die Klemmkraft, mit der die Anbindeteile des Brückenabschnitts an den Öffnungsrändern gehalten werden, reduziert werden. Die Verbindung der Anbindeteile mit den Öffnungsrändern dient der Vormontage der Klammer. Die Klammer wird von oben angesetzt und mit ihren hakenförmigen Anbindeteilen in die Verankerungsnut eingedrückt. Die vormontierte Klammer ist bei Bedarf mit einem relativ geringen Kraftaufwand entlang der leistenförmigen Öffnungsränder verschiebbar. Dabei ist die Haltekraft des Verhakungsmechanismus gross genug, damit sich die Klammer auch bei einer Überkopfmontage nicht durch das Gewicht der in den Kanal eingelegten Kabel von den Öffnungsrändern löst. Trotzdem kann die Klammer bei Bedarf einseitig mit nur relativ geringem Kraftaufwand gelöst werden, beispielsweise um den Kanal nachträglich mit weiteren Kabeln nachzubelegen. Mit Hilfe des Riegelorgans wird die Klammer schliesslich endgültig an einem der Öffnungsränder fixiert. Dabei erhöht die Fixierung die Haltekraft der Klammer soweit, dass sie nicht mehr unbeabsichtigt entlang der Öffnungsränder verschiebbar ist.

Aus fertigungstechnischer Sicht und aus Gründen einer einfachen Handhabung ist der Brückenabschnitt rahmenartig ausgebildet und umfasst zwei Riegelorgane mit Rastarmen, die elastisch federnd an einem Mittenbereich des Brückenabschnitts angelenkt sind und sich in Richtung der Längsenden des Brückenabschnitts erstrecken.

Mit Vorteil besteht jeder Rastarm aus einer Biegefeder, die im Mittenbereich des Brückenabschnitts angelenkt ist und einstückig in eine Klemmfeder übergeht. Die Klemmfeder besitzt im Längsschnitt eine etwa V-förmige Gestalt und weist einen frei abragenden Federschenkel auf, der die von Hand ausbiegbare Klinke bildet. Die einstückige, federnde Ausbildung der Rastarme ermöglicht eine einfache und kostengünstige Herstellung der Klammer. Dabei sind die Rastarme platzsparend angeordnet und überragen den Brückenabschnitt weder in Längsrichtung noch in Richtung seiner Breite. Der Biegefederteil der Rastarme hält die verrasteten Riegelorgane unter Vorspannung und erhöht deren Haltekraft. Die etwa V-förmige Klemmfeder ist quer zur Längserstreckung des Kabelkanals betätigbar und erhöht die Vorspannung der Verrastung der Fixierhaken mit den Rastnasen noch zusätzlich.

Indem die Federschenkel die Oberseite des Brückenabschnitts überragen und als Handhaben ausgebildet sind, können sie gut von Hand betätigt werden. Die Länge der Handhaben ist dabei derart bemessen, dass sie im vormontierten Zustand der Klammer über die freien Enden der Seitenwände des Kabelkanals vorstehen und bei Verrastung der Fixierhaken der Klinken mit den Rastnasen an den Öffnungsrändern die Handhaben bündig mit den freien Enden der Seitenwände abschliessen. Durch den Überstand der Handhaben über die Seitenwände des Kanals kann die endgültige Fixierung der Klammer auch gleichzeitig mit dem Verschliessen des Kanals mit einem Deckel erfolgen. Dabei kommen die Handhaben in Anschlag zur Unterseite des Deckels und werden beim Aufdrücken des Deckels nach unten bewegt, bis die Fixierhaken mit den Rastnasen an den Öffnungsrändern verrasten. Danach gewährleistet die Länge der Handhaben, dass sie die Seitenwände nicht überragen und die Montage des Deckels nicht behindern.

Um die Fixierung einer Seite der Klammer wieder zu lösen, wird die Handhabe dieser Seite gegen die Federkraft der Klemmfeder in Richtung des Mittenbereichs der Klammer gedrückt. Dabei kommt der Fixierhaken ausser Eingriff mit der Rastnase. Durch die Vorspannung der Biegefeder schwenkt der Rastarm nach oben, und das Verriegelungsorgan geht in die Ausgangsstellung zurück.

Eine Einlaufschräge an den Fixierhaken und eine dazu korrespondierende Eindrückschräge an den Rastnasen erleichtern die Verrastung. Durch Druck auf die Handhabe, beispielsweise von Hand oder über den aufgesetzten Deckel, gleitet die Einlaufschräge entlang der Eindrückschräge nach unten, bis der Fixierhaken und die Rastnase eine formschlüssige Verbindung eingehen. Die Biegefeder und die Klemmfeder werden vorgespannt, und der Fixierhaken setzt sich von innen unter die Rastnase. Durch die Vorspannung der Biegefeder und der Klemmfeder entsteht eine Kraftkomponente, welche die in Längsrichtung an der Aussenseite des abgewinkelten Öffnungsrands verlaufende Rastnase hochzieht. Dadurch wird der abgewinkelte Abschnitt des Öffnungsrands um eine parallel zur Längsrichtung verlaufende Achse verschwenkt, und das in der Verankerungsnut befindliche hakenförmige Anbindeteil wird weiter in die Hinterschneidung hineingezogen.

Der Widerstand der montierten und fixierten Klammer gegen ein unbeabsichtigtes Verschieben entlang der Öffnungsränder kann noch dadurch verbessert werden, dass die zusammenwirkenden Fixierhaken und Rastnasen einen erhöhten Reibbeiwert aufweisen. Dies kann beispielsweise dadurch erfolgen, dass wenigstens eine der bei Verrastung zusammenwirkenden Flächen des Fixierhakens und der Rastnase mit einem Rändelprofil versehen ist. Als alternative oder zusätzliche Massnahme kann die Rastnase aus einem weicheren Material bestehen als der Fixierhaken. Dabei wird der härtere, schneidenähnlich ausgebildete Fixierhaken durch die Federvorspannung in das weichere Material eingedrückt und bildet eine formschlüssige Verbindung, die einem Verrutschen der Klammer entgegenwirkt. Beispielsweise kann der Fixierhaken aus Hart- PVC bestehen und die Rastnase ein Materialsteg aus Weich-PVC sein.

In einer zweckmässigen Variante der Erfindung besteht die Klammer gesamthaft aus Kunststoff und ist vorzugsweise in einem Spritzgiessverfahren bzw. in einem Extrusionsverfahren hergestellt. Bei der Verwendung eines weicheren Materials für den die Rastnase bildenden Materialsteg kann beispielsweise auch ein Coextrusionsverfahren zur Anwendung kommen.

Im folgenden wird die Erfindung unter Bezugnahme auf ein in den schematischen Figuren dargestelltes Ausführungsbeispiel näher erläutert. Es zeigen:
- Fig. 1: eine perspektivische Darstellung der erfindungsgemässen Klammer;
- Fig. 2: einen Schnitt der vormontierten Klammer quer zur Längserstreckung eines Kabelkanals; und
- Fig. 3: die in ihrer Position fixierte Klammer in einer Darstellung gemäss Fig. 2.

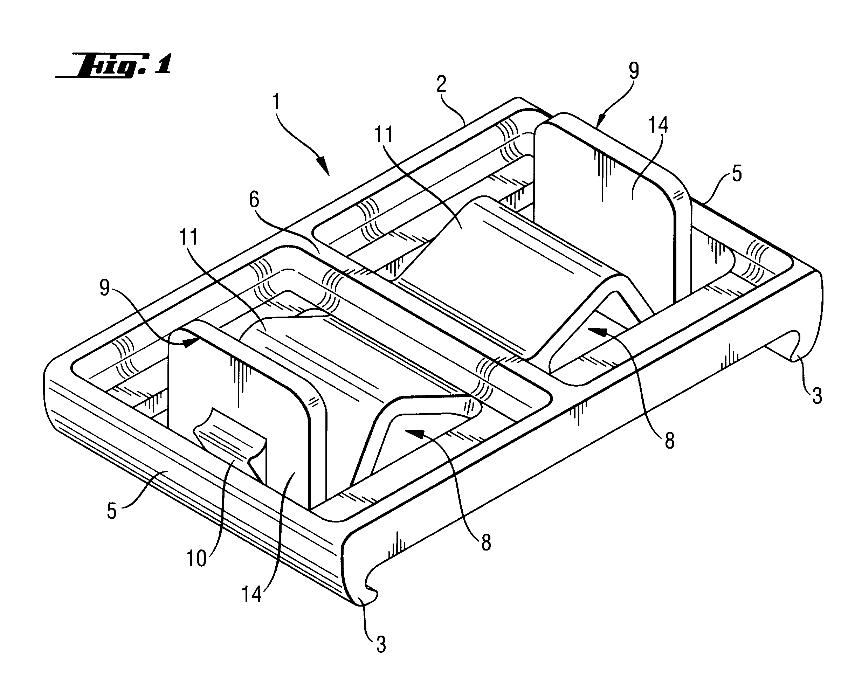

Das in Fig. 1 dargestellte Ausführungsbeispiel der erfindungsgemässen Klammer ist gesamthaft mit dem Bezugszeichen 1 versehen. Es besitzt einen rahmenartigen Brückenabschnitt 2 mit Ausnehmungen 8, an dessen Längsenden 5 hakenförmige Anbindeteile 3 vorgesehen sind. Die Hakenform wird erzielt, indem der Brückenabschnitt 2 an seinen Längsenden 5 nach innen gekröpft ist, wobei die resultierenden Haken aufeinander zugerichtet sind. Zu beiden Seiten eines Mittenbereichs 6 des Brückenabschnitts 2 ragen Riegelorgane ab, die von Rastarmen 11 und mit Fixierhaken 10 versehenen Klinken 9 gebildet sind. Die Klinken 9 sind in Längsrichtung der Klammer 1 ausbiegbar und reichen in die sich beidseits des Mittenbereichs 6 des Brückenabschnitts 2 erstreckenden Ausnehmungen 8. Die Rastarme 11 sind in die Ausnehmungen 8 abtauchbar.

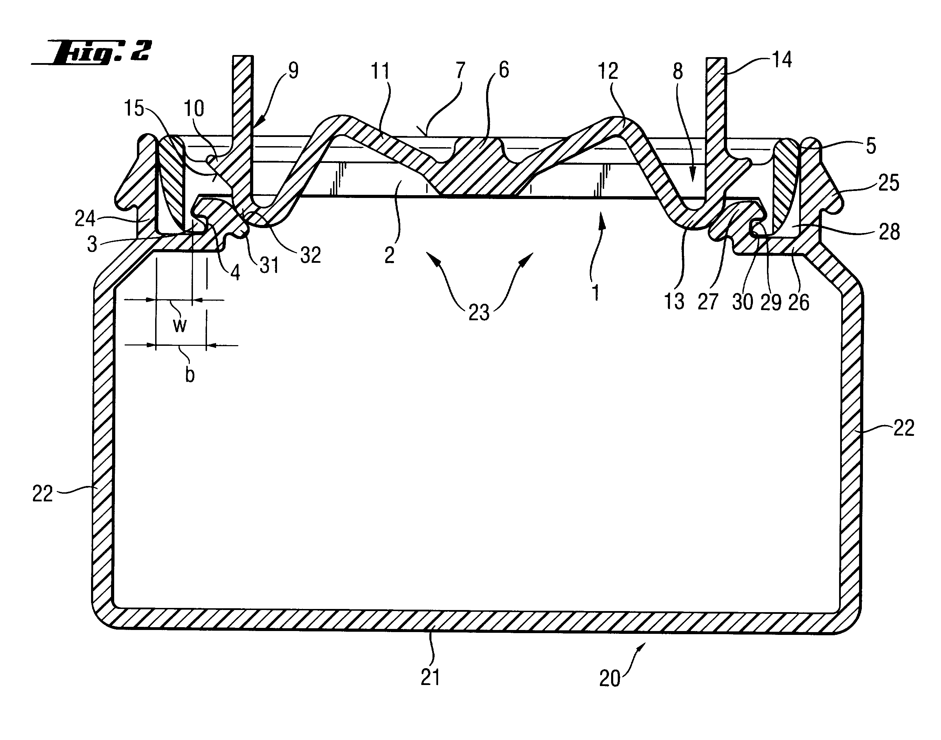

Fig. 2 zeigt eine erfindungsgemässe Klammer 1, die auf einem Kabelkanal 20 vormontiert ist. Der Kabelkanal 20 besitzt eine Rückwand 21, die an ihren beiden Längsseiten mit Seitenwänden 22 verbunden ist. Die Art der Anbindung der Seitenwände 22 an die Rückwand 21 des Kabelkanals ist für die vorliegende Erfindung unerheblich. Aus Gründen der Vollständigkeit sei erwähnt, dass die Seitenwände starr angebunden sein können, wie beispielsweise dargestellt ist, oder abklappbar und/oder lösbar mit der Rückwand verbunden sein können. Die Seitenwände 22 sind gegenüber der Rückwand geneigt und erstrecken sich beispielsweise etwa senkrecht dazu. Die der Rückwand 21 gegenüberliegende offene Seite 23 erlaubt das Einlegen von Kabeln in den Kabelkanal 20. Im Bereich der freien Enden 24 der Seitenwände 22 ragen leistenartige Öffnungsränder 26 nach innen ab, die parallel zur Längserstreckung des Kabelkanals 20 verlaufen. Ein Teil 27 jedes Öffnungsrandes 26 ist in Richtung der offenen Seite 23 abgewinkelt. Der abgewinkelte Öffnungsrandteil 27 und die Seitenwand 22 begrenzen eine Verankerungsnut 28, die parallel zum Öffnungsrand 26 verläuft. Im Übergangsbereich des Öffnungsrands 26 zum abgewinkelten Teil 27 erweitert sich die Verankerungsnut 28 in einer Hinterschneidung 29.

Die Klammer 1 wird von oben auf die leistenförmigen Öffnungsränder 26 aufgesetzt und in die Verankerungsnuten 28 gedrückt. Dabei gleiten die hakenartigen Anbindeteile 3 in die Verankerungnuten 28 und verhaken in der Hinterschneidung 29. Die als Abstand des nach innen weisenden Hakenanschlags 4 vom Längsende 5 der Klammer definierte Hakenbreite b ist grösser als die lichte Weite w der Verankerungsnut, die durch den Abstand des abgewinkelten Teils 27 des Öffnungsrands 26 von der Seitenwand 22 an der Mündung der Verankerungsnut 28 gegeben ist. Der Abstand des Anschlags 30 der Hinterschneidung 29 von der Seitenwand 22 am Grund der Verankerungsnut 28 entspricht im wesentlichen der Hakenbreite b. Durch das Verhaken der hakenartigen Anbindeteile 3 in der Hinterschneidung 29 der Verankerungsnut 28 wird die Klammer 1 vorfixiert. Bei Zugbeanspruchung, beispielsweise durch das Kabelgewicht bei Deckenmontage, verklemmt sich der Verhakungsmechanismus 3, 29 noch weiter. Damit wird die Haltekraft der Klammer 1 verstärkt, und einem unbeabsichtigten Lösen der Klammer 1 von den Öffnungsrändern 26 des Kabelkanals 20 kann entgegengewirkt werden.

Die Verhakung der hakenförmigen Anbindeteile 3 in der Hinterschneidung 29 der Verankerungsnut 28 ist andererseits bei Bedarf sehr einfach wieder lösbar, indem die Klammer 1 an einem Längsende gefasst und aus der Verankerungsnut 28 herausgezogen wird. Wird die Klammer 1 auf diese Weise einseitig hochgezogen, beispielsweise um den Kanal 20 mit weiteren Kabeln nachzubelegen, wird das hakenartige Anbindeteil 3 am gegenüberliegenden Längsende 5 der Klammer 1 weiter in die Hinterschneidung 29 der gegenüberliegenden Verankerungsnut 28 eingedreht. Dabei stützt sich das Längsende 5 der Klammer 1 an der Innenseite der Seitenwand 22 des Kabelkanals 20 ab. Der Verhakungsmechanismus verklemmt sich in der Hinterschneidung 29 der Verankerungsnut 28 und bildet eine Art Gelenk, um das die Klammer 1 hochgezogen werden kann, wobei das gegenüberliegende Längsende 5 der Klammer 1 mit dem zugehörigen Öffnungsrand 26 verbunden bleibt. Die montierte Klammer 1 übernimmt die Versteifung der Seitenwände 22 und gewährleistet den korrekten Abstand der Seitenwände 22 voneinander, damit ein Deckel mit der erforderlichen Klemmkraft auf den Kabelkanal aufsetzbar ist.

Die derart vormontierte Klammer 1 ist mit Hilfe der Riegelorgane 9 - 11 an den Öffnungsrändern unverrückbar fixierbar. Jeder Rastarm 11 besteht aus eine Biegefeder 12, die am Mittenbereich 6 des rahmenartigen Brückenabschnitts 2 angelenkt ist und vorzugsweise einstückig mit einer Klemmfeder 13 verbunden ist. Die Klemmfeder 13 besitzt im Längsschnitt eine etwa V-förmige Gestalt und weist einen Federschenkel auf, der die mit dem Fixierhaken 10 versehene Klinke 9 bildet. Der Fixierhaken 10 ist zur Verrastung mit einer Rastnase 31 ausgebildet, die von der nach innen gerichteten Seitenfläche des Öffnungsrandes 26 abragt und sich entlang des Öffnungsrands 26 erstreckt. Das freie Ende des Federschenkels 9 überragt die Oberseite 7 der Klammer 1 und dient als Handhabe 14 für den Anwender. Die Länge der Handhabe 14 ist dabei derart bemessen ist, dass sie im vormontierten Zustand der Klammer 1 über die freien Enden 24 der Seitenwände 22 des Kabelkanals 1 vorsteht und bei Verrastung des Fixierhakens 10 der Klinke 9 mit der Rastnase 31 am jeweiligen Öffnungsrand 26 bündig mit den freien Enden 24 der Seitenwände 22 abschliesst. Eine Einlaufschräge 15 an der Aussenseite des Fixierhakens 10 und eine Eindrückschräge 32 an der Rastnase 31 erleichtern die Verrastung des Riegelorgans.

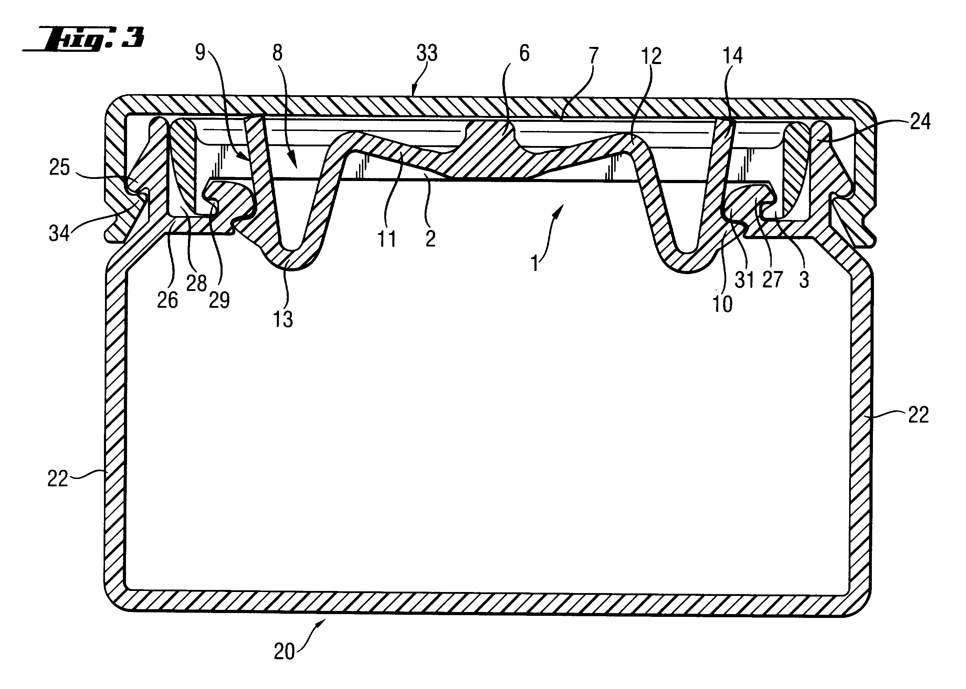

Fig. 3 zeigt die erfindungsgemässe Klammer 1 im fixierten Zustand. Dabei ist der Kabelkanal 20 mit aufgesetztem Deckel 33 dargestellt, wobei Rastorgane 34 des Deckels 33 in einer Rastnut 25 an den Aussenseiten der freien Enden 24 der Seitenwände 22 des Kabelkanals 20 unterhaken. Die im vormontierten Zustand der Klammer 1 die Oberseite 7 des Brückenabschnitts 2 überragenden Handhaben 14 sind durch Betätigung von Hand oder durch den aufgesetzten Deckel 33 in die Ausnehmungen 8 im rahmenartigen Brückenabschnitt 2 abgetaucht. Die Fixierhaken 10 an den Klinken 9 sind mit den an der Aussenseite der abgewinkelten Öffnungsrandteile 27 nach innen abragenden Rastnasen 31 verrastet. Die im verrasteten Zustand zusammenwirkenden Flächen des Fixierhakens 10 und der Rastnase 31 können mit einem Rändelprofil versehen sein. In einer alternativen Ausführungsvariante der Erfindung kann die Rastnase 31 aus einem weicheren Material bestehen als der Fixierhaken 10. Beispielsweise besteht der Fixierhaken 10 aus Hart-PVC und die Rastnase 31 aus Weich-PVC. Im verrasteten Zustand wird der härtere, schneidenähnlich ausgebildete Fixierhaken 10 durch die Federvorspannung in das weichere Material der Rastnase 31 eingedrückt und bildet eine formschlüssige Verbindung, die einem unbeabsichtigten Verrutschen der Klammer 1 in Längsrichtung der Öffnungsränder 26 zusätzlich entgegenwirkt.

Dabei überragen die Handhaben 14 die Oberseite 7 der Klammer 1 nicht mehr und können das Aufsetzen des Deckels 33 nicht behindern. Durch die Federwirkung der Biegefeder 12 und der Klemmfeder 13 wird die Verrastung des Fixierhakens 10 mit der Rastnase 31 unter Vorspannung gehalten. Aus der Vorspannung resultiert eine Kraftkomponente, welche die an der Aussenseite des abgewinkelten Öffnungsrandteils 27 in Längsrichtung des Kabelkanals 20 verlaufende Rastnase 31 hochzieht. Dadurch wird der Endabschnitt des Öffnungsrands 26 um eine parallel zur Längsrichtung verlaufende Achse verschwenkt, und das in der Verankerungsnut 28 befindliche hakenförmige Anbindeteil 3 wird weiter in die Hinterschneidung 29 hineingezogen.

Um die Fixierung einer Seite der montierten Klammer 1 wieder zu lösen, wird die Handhabe 14 dieser Seite gegen die Federkraft der Klemmfeder 13 in Richtung des Mittenbereichs 6 des Brückenabschnitts 2 gedrückt. Dabei kommt der Fixierhaken 10 ausser Eingriff mit der Rastnase 31. Durch die Vorspannung der Biegefeder 12 schwenkt der Rastarm 11 nach oben, und das Verriegelungsorgan geht automatisch in die Ausgangsstellung zurück. Nach dem Lösen der Verriegelung kann die Klammer 1 einseitig aus der Verankerungsnut 26 gehoben werden, um weitere Kabel einzulegen.

## Patentansprüche

1. Klammer für einen Kabelkanal, der an seiner offenen Seite (23), im Bereich der freien Enden (24) seiner Seitenwände (22) nach innen abragende, leistenartige Öffnungsränder (26) aufweist, mit einem die offene Seite (23) überbrückenden, länglichen Brückenabschnitt (2), dessen Längsenden (5) mit Anbindeteilen (3) für die leistenartigen Öffnungsränder (26) versehen sind, **dadurch gekennzeichnet,** dass die Anbindeteile (3) als nach innen, aufeinander zugekröpfte Haken ausgebildet und jeweils in einer Hinterschneidung (29) verrastbar sind, die in einer Verankerungsnut (28) vorgesehen ist, welche in Längsrichtung des Kabelkanals (20) verläuft und von einem zur offenen Seite (23) abgewinkelten Öffnungsrandteil (27) und der Seitenwand (22) begrenzt ist.

2. Klammer nach Anspruch 1, dadurch gekennzeichnet, dass der quer zur Längserstreckung des Kabelkanals (20) gemesse Abstand (b) der einander zugekehrten Hakenanschläge (4) von dem zugehörigen Längsende (5) der Klammer (1) grösser ist als die lichte Weite (w) der Verankerungsnut (26) an ihrer Mündung.

3. Klammer nach einem der vorangehenden Ansprüche, dadurch gekennzeichnet, dass der Brückenabschnitt (2) mit wenigstens einem von Hand betätigbaren Riegelorgan ausgestattet ist, das eine quer zur Längserstreckung des Kabelkanals (20) ausbiegbare Klinke (9) mit einem Fixierhaken (10) umfasst, der in Schliesslage eine Rastverbindung mit einer Rastnase (31) eingeht, die an der nach innen gerichteten Seite der abgewinkelten Öffnungsrandteile (27) in Längsrichtung verläuft.

4. Klammer nach Anspruch 3, dadurch gekennzeichnet, dass der Brückenabschnitt (2) rahmenartig ausgebildet ist und zwei Riegelorgane mit Rastarmen (11) umfasst, die elastisch federnd an einem Mittenbereich (6) des Brückenabschnitts (2) angelenkt sind und sich in Richtung der Längsenden (5) des Brückenabschnitts (2) erstrecken.

5. Klammer nach Anspruch 4, dadurch gekennzeichnet, dass jeder Rastarm (11) aus einer Biegefeder (12) besteht, die im Mittenbereich (6) des Brückenabschnitts (2) angelenkt ist und vorzugsweise einstückig in eine Klemmfeder (13) übergeht, die im Längsschnitt von etwa V-förmiger Gestalt ist und einen frei abragenden Federschenkel aufweist, der die von Hand ausbiegbare Klinke (9) mit dem Fixierhaken (10) bildet.

6. Klammer nach Anspruch 5, dadurch gekennzeichnet, dass die Federschenkel die Oberseite (7) des Brückenabschnitts (2) überragen und als Handhaben (14) ausgebildet sind, deren Länge derart bemessen ist, dass sie im vormontierten Zustand der Klammer (1) über die freien Enden (24) der Seitenwände (22) des Kabelkanals (20) vorstehen, und bei Verrastung der Fixierhaken (10) der Klinken (9) mit den Rastnasen (31) an den Öffnungsrändern (26) die Handhaben (14) im wesentlichen bündig mit den freien Enden (24) der Seitenwände (22) abschliessen.

7. Klammer nach einem der Ansprüche 3 - 6, dadurch gekennzeichnet, dass die Fixierhaken (10) eine Einlaufschräge (15) aufweisen, die bei der Verrastung an einer Eindrückschräge (32) an den Rastnasen (31) entlanggleitbar ist.

8. Klammer nach einem der Ansprüche 3 - 7, dadurch gekennzeichnet, dass wenigstens eine der bei Verrastung zusammenwirkenden Flächen des Fixierhakens (10) und der Rastnase (31) mit einem Rändelprofil versehen ist.

9. Klammer nach einem der Ansprüche 3 bis 8, dadurch gekennzeichnet, dass die Rastnase (31) aus einem weicheren Material besteht als der Fixierhaken (10).

10. Klammer nach einem der vorangehenden Ansprüche, dadurch gekennzeichnet, dass sie gesamthaft aus Kunststoff besteht und vorzugsweise in einem Spritzgiessverfahren bzw. in einem Extrusionsverfahren hergestellt ist.
